# EUROPEAN PATENT SPECIFICATION

(11) **EP 2 209 963 B1**
(45) Date of publication and mention of the grant of the patent: **01.06.2011**
(21) Application number: 08839781.5
(22) Date of filing: 17.10.2008
(51) Int. Cl.: E06B 3/08

(54) **EXTRUDED GEOPOLYMER FRAME PROFILES FOR WINDOWS OR DOORS**
EXTRUDIERTE GEOPOLYMERE RAHMENPROFILE FÜR FENSTER ODER TÜREN
PROFILÉS DE CADRE GÉOPOLYMÈRES EXTRUDÉS POUR FENÊTRES OU PORTES

(30) Priority: 17.10.2007 GB 0720405
(43) Date of publication of application: 28.07.2010
(73) Proprietor: Cseng Ventures Limited, Peterborough PE1 1SA (GB)
(72) Inventor: LANGAN, Michael, Loughborough Leicestershire LE11 2UA (GB); REID, Michael, Peterborough Cambridgeshire PE1 3PA (GB); SHEPPARD, Phil, Loughborough Leicestershire LE11 4WB (GB)
(74) Representative: Lamb, Richard Andrew
(86) International application number: PCT/GB2008/003513
(87) International publication number: WO 2009/050472

(56) References cited:
- WO-A-2006/125287
- DE-A1- 4 332 528
- FR-A- 2 651 270
- NL-C1- 1 008 128

## Description

This invention relates to frames for glazing in buildings, and in particular, but not exclusively, to windows, glazed doors and conservatories.

Prior art materials for such frames are typically extruded ultraviolet resistant polyvinyl chloride (uPVC), aluminium or, for high cost applications, hardwood or coated softwood.

uPVC is the most commonly used due to its low cost. The lifespan of uPVC window profiles is relatively short and the appearance of the surface becomes rapidly unattractive. uPVC is considered to be low value and where appearance is important, the more expensive wooden option is often used. Another disadvantage of uPVC is the emission of hazardous and toxic components at various stages in its lifecycle. There have been calls for a ban on PVC production for this reason. Noxious gasses are given off during production posing a potential risk to the health of production workers. The material is difficult to recycle so it is generally disposed of in an unsustainable manner. When incinerated, uPVC can evolve toxic gasses such as hydrogen chloride and dioxins. PVC has a very high embodied energy and contributes significantly to the total embodied energy in a building.

Aluminium also has the advantage of being extrudable, but has large embodied carbon emissions, may melt in case of fire and is regarded as not aesthetically pleasing.

Wooden frames require continual maintenance, will burn in the event of fire and are prone to rot. Hardwood frames are typically more expensive than either aluminium or uPVC.

All the above prior art materials, in the event of a fire in a building, may collapse, allow oxygen into the building and accelerate the spread of fire. uPVC and some wood treatments will also evolve toxic gasses that may injure any people in the building.

Prior art window frames using geopolymeric materials have been proposed as moulded items. A moulded frame would need heavy sections to be strong enough. Moreover, moulding tools are very expensive and not suited to the window market as a separate tool would be needed for every size of window manufactured, whereas extrusion dies are relatively cheap and one die can produce any window sizes by cutting, mitring and fixing extruded window profile sections.

It is an object of the present invention to at least mitigate some of the above problems.

FR 2651270 describes forming a window frames from at least one cast geopolymer material, preferably additional in combination with a thermosetting resin.

WO 2006/125287 describes a particular prior art natural aluminosilicate composite and aggregate material synthesised in an alakaline environment, and method of manufacturing such a material. This is described as being an improved geopolymer type material.

It is an object of the present invention to at least mitigate some of the above problems.

Accordingly, there is provided a frame for a window or door, the frame for receiving glazing, wherein the frame is formed from extruded geopolymer sections.

The extruded geopolymer presents material performance advantages over other materials, without the disadvantages associated with moulding the geopolymer.

Preferably the strength of the material is enhanced by adding a fibre reinforcing material.

Advantageously the extrusion process aligns the fibres with the direction of flow which significantly increases the strength in comparison with the random orientation achieved when injection moulding the material. This enables thinner profiles to be used, requiring less material.

Preferably there is a chemical bond between the fibre and the geopolymer matrix.

Preferably sub micron fibre is used to further enhance strength.

Preferably the reinforcement fibre is cellulosic or aramid.

Advantageously, the chemical composition of cellulosic or aramid fibre is such that strong chemical bonds are formed with the geopolymer matrix without any pre-treatment of the fibre producing a very tough and flexible reinforced extrusion.

Advantageously, the geopolymer material is capable of withstanding high temperatures. Therefore in the event of a fire a window fabricated from this material will resist collapse for longer than the prior art uPVC, aluminium and wood. The geopolymer and cellulosic materials will not produce toxic or dangerous substances either in a building fire or upon disposal.

Preferably, mitred lengths of the extrusion are joined together using a geopolymer adhesive. This adhesive gives the same advantages to the joint as the geopolymer material does to the extruded profile.

Advantageously, a geopolymer frame will have a longer life as the material will maintain its aesthetic finish and will not require further treatment such as paint.

Advantageously the material can be easily recycled with a low energy recycling process.

Advantageously, the appearance of the material may be varied greatly by addition of a variety of different fillers or surface treatments, giving enhanced aesthetic appeal and enabling the finish to be integrated with a range of building styles.

The invention will now be described, by way of example only, with reference to the following drawings, in which:
Figure 1 is a plan view of a window frame of the present invention, and
Figure 2 is a cross-sectional view of the window frame of Figure 1 along the line II-II of Figure 1.

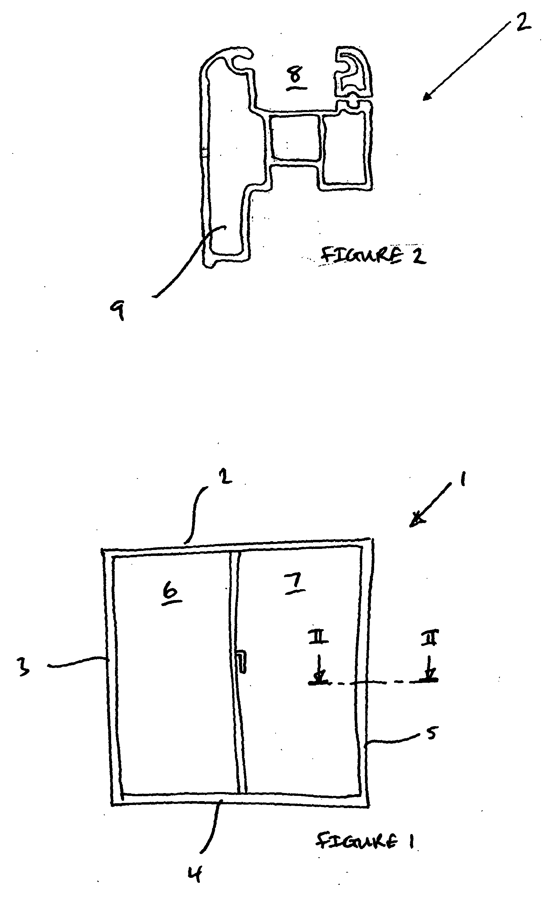

Referring to Figure 1, a window 1 is shown which is formed from four sections 2, 3, 4, 5 of extruded geopolymer. The four sections retain glazing 6, 7 in position within a groove 8 (see Figure 2) as follows.

With reference to Figure 2, the section 2 is shown in cross-section to define the groove 8 and a lip 9 for fixing the frame to building (not shown for clarity). The section 2 is extruded from geopolymer material to form the desired profile. Mitred lengths of the extruded sections are mitred to form the frame which can retain single, or multiple layer of glass to form a glazed unit.

The base material is a geopolymer matrix which is enhanced by adding a fibre reinforcing material prior to extrusion. The fibre is a cellulosic or alternatively aramid fibre which is chemically bonded to the geopolymer matrix. The cellulosic reinforcement fibre originates from a root vegetable. A sub micron fibre can also be used to further enhance the strength of the frame 1. Such a construction produces a very tough and flexible reinforced extrusion.

The sections 2, 3, 4, 5 are joined together using a geopolymer adhesive (not shown for clarity).

For the avoidance of doubt a geopolymer is a material containing large inorganic molecules comprising mostly of aluminium, oxygen and silicon. The term extrusion is taken to include pultrusion.

## Claims

1. Window frame or door frame formed from geopolymer sections (2,3,4,5), the frame (2) for receiving glazing (6,7), **characterised in that** the frame (2) is formed from extruded geopolymer sections (2,3,4,5).

2. Window frame or door frame according to claim 1, **characterised in that** the geopolymer includes fibres which are aligned so as to reinforce the frame (2).

3. Window frame or door frame according to claim 1 or 2, **characterised in that** the reinforcement is (sub micron) ultra fine fibre reinforcement.

4. Window frame or door frame according to claims 2 or 3, **characterised in that** the fibre reinforcement is cellulosic.

5. Window frame or door frame according to claims 2 or 3, **characterised in that** the fibre reinforcement is aramid.

6. Window frame or door frame according to claims 2 or 3, **characterised in that** the fibre reinforcement is surface treated.

7. Window frame or door frame according to claim 4, **characterised in that** the reinforcement fibre originates from a root vegetable.

8. Window frame or door frame according to claims 1 to 7, **characterised in that** sections (2,3,4,5) of the frame (2) are joined using a geopolymer adhesive.

9. Window frame or door frame according to claims 1 to 8, **characterised in that** the extrusion process produces surface texturing on the frame (2).

10. Window frame or door frame according to claims 1 to 9, **characterised in that** the sections (2,3,4,5) are produced by extrusion and/or pultrusion.

## Patentansprüche

1. Fensterrahmen oder Türrahmen, der aus Geopolymerprofilen (2, 3, 4, 5) besteht, wobei der Rahmen (2) zum Aufnehmen von Verglasung (6, 7) bestimmt ist, **dadurch gekennzeichnet, dass** der Rahmen (2) aus extrudierten Geopolymerprofilen (2, 3, 4, 5) besteht

2. Fensterrahmen oder Türrahmen nach Anspruch 1, **dadurch gekennzeichnet, dass** das Geopolymer Fasern enthält, die so ausgerichtet sind, dass sie den Rahmen (2) verstärken.

3. Fensterrahmen oder Türrahmen nach Anspruch 1 oder 2, **dadurch gekennzeichnet, dass** die Verstärkung ultrafeine (Submikrometer-)Faserverstärkung ist.

4. Fensterrahmen oder Türrahmen nach den Ansprüchen 2 oder 3, **dadurch gekennzeichnet, dass** die Faserverstärkung zellulosehaltig ist.

5. Fensterrahmen oder Türrahmen nach den Ansprüchen 2 oder 3, **dadurch gekennzeichnet, dass** die Faserverstärkung aus Aramid besteht.

6. Fensterrahmen oder Türrahmen nach den Ansprüchen 2 oder 3, **dadurch gekennzeichnet, dass** die Faserverstärkung oberflächenbehandelt ist.

7. Fensterrahmen oder Türrahmen nach Anspruch 4, **dadurch gekennzeichnet, dass** die Faserverstärkung von einem Wurzelgemüse stammt.

8. Fensterrahmen oder Türrahmen nach den Ansprüchen 1 bis 7, **dadurch gekennzeichnet, dass** Profile (2, 3, 4, 5) des Rahmens (2) unter Verwendung eines Geopolymer-Klebstoffs verbunden sind.

9. Fensterrahmen oder Türrahmen nach den Ansprüchen 1 bis 8, **dadurch gekennzeichnet, dass** durch den Extrusionsprozess Oberflächentextur an dem Rahmen (2) erzeugt wird.

10. Fensterrahmen oder Türrahmen nach den Ansprüchen 1 bis 9, **dadurch gekennzeichnet, dass** die Profile (2, 3, 4, 5) durch Extrusion und/oder Pultrusion hergestellt werden.

## Revendications

1. Cadre de fenêtre ou cadre de porte formé à partir de sections géopolymères (2, 3, 4, 5), le cadre (2) étant destiné à recevoir un vitrage (6, 7), **caractérisé en ce que** le cadre (2) est formé à partir de sections géopolymères extrudées (2, 3, 4, 5).

2. Cadre de fenêtre ou cadre de porte selon la revendication 1, **caractérisé en ce que** le géopolymère comprend des fibres qui sont alignées afin de renforcer le cadre (2).

3. Cadre de fenêtre ou cadre de porte selon la revendication 1 ou 2, **caractérisé en ce que** le renfort est un renfort à fibres ultra fines (submicroniques).

4. Cadre de fenêtre ou cadre de porte selon les revendications 2 ou 3, **caractérisé en ce que** le renfort à fibres est cellulosique.

5. Cadre de fenêtre ou cadre de porte selon les revendications 2 ou 3, **caractérisé en ce que** le renfort à fibres est de l'aramide.

6. Cadre de fenêtre ou cadre de porte selon les revendications 2 ou 3, **caractérisé en ce que** le renfort à fibres est traité en surface.

7. Cadre de fenêtre ou cadre de porte selon la revendication 4, **caractérisé en ce que** la fibre de renfort provient d'un légume racine.

8. Cadre de fenêtre ou cadre de porte selon les revendications 1 à 7, **caractérisé en ce que** des sections (2, 3, 4, 5) du cadre (2) sont jointes en utilisant un adhésif géopolymère.

9. Cadre de fenêtre ou cadre de porte selon les revendications 1 à 8, **caractérisé en ce que** le procédé d'extrusion produit une texturation de surface sur le cadre (2).

10. Cadre de fenêtre ou cadre de porte selon les revendications 1 à 9, **caractérisé en ce que** les sections (2, 3, 4, 5) sont fabriquées par extrusion et/ou pultrusion.
